(19) Europäisches Patentamt
European Patent Office
Office européen des brevets

(11) **EP 4 597 604 A1**

(12) **EUROPEAN PATENT APPLICATION**
published in accordance with Art. 153(4) EPC

(43) Date of publication:
06.08.2025 Bulletin 2025/32

(21) Application number: 23872330.8

(22) Date of filing: 26.09.2023

(51) International Patent Classification (IPC):
*H01M 4/13* (2010.01)     *H01M 4/02* (2006.01)
*H01M 4/04* (2006.01)     *H01M 4/139* (2010.01)
*H01M 4/62* (2006.01)

(52) Cooperative Patent Classification (CPC):
H01M 4/02; H01M 4/04; H01M 4/13; H01M 4/139;
H01M 4/62; Y02E 60/10

(86) International application number:
PCT/JP2023/034913

(87) International publication number:
WO 2024/071107 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022 JP 2022157710

(71) Applicant: Panasonic Energy Co., Ltd.
Osaka 570-8511 (JP)

(72) Inventors:
• MISHIMA Kei
  Kadoma-shi, Osaka 571-0057 (JP)
• SAKITANI Nobuhiro
  Kadoma-shi, Osaka 571-0057 (JP)
• KATOGI Akihiro
  Kadoma-shi, Osaka 571-0057 (JP)

(74) Representative: Novagraaf International SA
Chemin de l'Echo 3
1213 Onex, Geneva (CH)

(54) **SECONDARY BATTERY POSITIVE ELECTRODE, SECONDARY BATTERY, AND PRODUCTION METHOD FOR SECONDARY BATTERY POSITIVE ELECTRODE**

(57) A secondary battery positive electrode includes a belt-shaped positive electrode current collector and a positive electrode mixture layer carried on a surface of the positive electrode current collector. The positive electrode current collector has a first region and a second region. The first region is an end area at both ends of the positive electrode current collector in the widthwise direction of the positive electrode current collector, extending in the longitudinal direction of the positive electrode current collector. The second region is a central area in the middle part of the positive electrode current collector in the widthwise direction of the positive electrode current collector, extending in the longitudinal direction of the positive electrode current collector. The positive electrode mixture layer includes a first positive electrode mixture layer carried on the first region and a second positive electrode mixture layer carried on the second region. The positive electrode mixture layer includes a first positive electrode mixture layer carried on the first region and a second positive electrode mixture layer carried on the second region. The first positive electrode mixture layer contains a first positive electrode active

material. The second positive electrode mixture layer contains a second positive electrode active material. An average particle diameter D1 of the first positive electrode active material is 1 $\mu$m or more and 7 $\mu$m or less. An average particle diameter D2 of the second positive electrode active material is 9 $\mu$m or more and 30 $\mu$m or less.

*FIG. 1*

## Description

[Technical Field]

Present disclosure relates to a secondary battery positive electrode, a secondary battery, and a production method for secondary battery positive electrodes.

[Background Art]

Secondary batteries, particularly lithium-ion secondary batteries, are expected as power sources for small consumer application, power storage devices, and electric vehicles because of their high power and high energy density.

Patent Literature 1 proposes "a lithium-ion secondary battery including: a positive electrode including a positive electrode current collector and a positive electrode mixture layer fixed to a surface of the positive electrode current collector with a predetermined width L; a negative electrode including a negative electrode current collector and a negative electrode mixture layer fixed to a surface of the negative electrode current collector with a width wider than that of the positive electrode mixture layer; and a nonaqueous electrolyte, wherein the positive electrode mixture layer has a central region including the center in the widthwise direction and a pair of end regions including respective ends in the widthwise direction, the central region contains a first positive electrode active material and a conductive material, the end regions contain a second positive electrode active material and a conductive material, and given that d1 ($\mu$ m) represents an average primary particle diameter of the first positive electrode active material, d2 ($\mu$ m) represents an average primary particle of the second positive electrode active material, and L2 represents the width of each of the paired end regions, the relationship between d1, d2, L, and L2 satisfies the following conditions: d1 < d2, 1.5 $\mu$m $\leq$ d2, and (2 $\times$ L2) $\leq$ (L/3)."

[Citation List]

[Patent Literature]

Patent Literature 1: Japanese Laid-Open Patent Publication No. 2018-181543

[Summary of Invention]

[Technical Problem]

From the point of view of productivity, a belt-shaped positive electrode is usually produced by slitting a stacked intermediate of a wide current collector sheet having a surface carrying a positive electrode mixture layer thereon to a predetermined width. However, particles of a positive electrode active material bites into a slitting blade during slitting to damage the blade. This necessitates replacement of the slitting blade in a short period of time, which may lead to reduced productivity of the positive electrode. In order to manifest battery performance (e.g., charge and discharge performance), a positive electrode produced, for example, through slitting is required to have a predetermined liquid electrolyte circulation property.

[Solution to Problem]

One aspect of the present disclosure relates to a secondary battery positive electrode including: a positive electrode current collector having a belt shape; and a positive electrode mixture layer carried on a surface of the positive electrode current collector; wherein the positive electrode current collector has a first region and a second region, the first region is an end area at both ends of the positive electrode current collector in a widthwise direction of the positive electrode current collector, extending in a longitudinal direction of the positive electrode current collector, the second region is a central area in a middle part of the positive electrode current collector in the widthwise direction, extending in the longitudinal direction of the positive electrode current collector, the positive electrode mixture layer includes a first positive electrode mixture layer carried on a surface of the first region, and a second positive electrode mixture layer carried on a surface of second region, the first positive electrode mixture layer contains a first positive electrode active material, the second positive electrode mixture layer contains a second positive electrode active material, an average particle diameter D1 of the first positive electrode active material is 1 $\mu$m or more and 7 $\mu$m or less, and an average particle diameter D2 of the second positive electrode active material is 9 $\mu$m or more and 30 $\mu$m or less.

Another aspect of the present disclosure relates to a secondary battery including: a positive electrode; a negative electrode; and a liquid electrolyte, wherein the positive electrode is the aforementioned secondary battery positive electrode.

A still another aspect of the present disclosure relates to a production method for secondary battery positive electrodes including: a first step of preparing a current collector sheet having first regions and second regions that alternate in a striped pattern; a second step of preparing a first positive electrode slurry containing a first positive electrode active material; a third step of preparing a second positive electrode slurry containing a second positive electrode active material; a fourth step of forming a first positive electrode mixture layer by applying the first positive electrode slurry to surfaces of the first regions, followed by drying; a fifth step of forming a second positive electrode mixture layer by applying the second positive electrode slurry to surfaces of the second regions, followed by drying; and a sixth step of obtaining a plurality of positive electrodes in a belt shape by cutting within the first regions in a longitudinal direction of the first regions together with the first positive electrode mixture layer in a stacked intermediate of the first positive electrode mixture layer, the second positive electrode mixture layer, and the current collector sheet, wherein an average particle diameter D1 of the first positive electrode active material is 1 $\mu$m or more and 7 $\mu$m or less, and an average particle diameter D2 of the second positive electrode active material is 9 $\mu$m or more and 30 $\mu$m or less.

[Advantageous Effects of invention]

According to the present disclosure, it is possible to suppress a decrease in productivity of a positive electrode while ensuring a liquid circulation property of the positive electrode.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] FIG. 1 is a schematic top view of an example of a secondary battery positive electrode according to an embodiment of the present disclosure.

[FIG. 2] FIG. 2 is a schematic cross-sectional view of the example of the secondary battery positive electrode according to the embodiment of the present disclosure.

[FIG. 3] FIG. 3 is a schematic top view of the main part of an example of a current collector sheet prepared in a first step of a production method for secondary battery positive electrodes according to an embodiment of the present disclosure.

[FIG. 4] FIG. 4 is a schematic top view of the main part of an example of a stacked intermediate obtained in a fourth step and a fifth step of the production method for secondary battery positive electrodes according to an embodiment of the present disclosure.

[FIG. 5] FIG. 5 is a schematic perspective view of a secondary battery with a partial cutaway, according to an embodiment of the present disclosure.

[Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be replaced with "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one kind of them may be selected and used singly, or two or more types of them may be used in combination.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

[Secondary Battery Positive Electrode]

A secondary battery positive electrode according to an embodiment of the present disclosure includes a positive electrode current collector having a belt shape and a positive electrode mixture layer carried on a surface of the positive electrode current collector. The secondary battery positive electrode is produced by slitting a stacked intermediate of a wide current collector sheet carrying the positive electrode mixture layer on the surface thereof to a predetermined width. The positive electrode mixture layer is carried on one or both surfaces (main surfaces) of the positive electrode current collector. Typically, the positive electrode mixture layer is a layer (including a membrane or a film) constituted by a positive electrode mixture. The positive electrode mixture (layer) contains a positive electrode active material in the form of particles as an essential component.

The positive electrode current collector has a first region and a second region. The first region is an end area at both ends of the positive electrode current collector in the widthwise direction, extending in the longitudinal direction of the positive electrode current collector. The end areas are formed by slitting. The second region is a central area in the middle part of the positive electrode current collector in the widthwise direction, extending in the longitudinal direction of the positive electrode current collector. The positive electrode mixture layer includes a first positive electrode mixture layer carried on the surface of the first region and a second positive electrode mixture layer carried on the surface of the second region. The first positive electrode mixture layer contains a first positive electrode active material, and the second positive electrode mixture layer contains a second positive electrode active material. An average particle diameter D1 of the first positive electrode active material is 1 $\mu$m or more and 7 $\mu$m or less, and an average particle diameter D2 of the second positive electrode active material is 9 $\mu$m or more and 30 $\mu$m or less.

The first region includes a 1a region (first a region) and a 1b region (first b region), each extending in the longitudinal direction of the positive electrode current collector, at one end edge and the other end edge of the positive electrode current collector in the widthwise direction, respectively. The first positive electrode mixture layer includes a 1a positive electrode mixture layer (first a positive electrode mixture layer) carried on the surface of the 1a region and a 1b positive electrode mixture layer (first b positive electrode mixture layer) carried on the surface of the 1b region.

The positive electrode current collector may further have a third region besides the first region and the second region. The third region is a region not carrying the positive electrode mixture layer, and is located at a predetermined position along the width of the positive electrode current collector, either at one end or near the center of the positive electrode current collector in the longitudinal direction. The third region is used for connection to a positive electrode lead, for example.

The present inventors conducted intensive study focusing on the particle size of the positive electrode active material. As a result, new knowledge was found that when the positive electrode active material contained in a positive electrode mixture layer is a collection of small particles having an average particle diameter of 7 $\mu$m or less, the liquid circulation property of the positive electrode mixture layer (liquid absorption of positive electrode) is decreased while slitting blade damage due to biting is inhibited.

Based on the above knowledge, the present inventors carried out more intensive study. As a result, it was newly found that when a part of the positive electrode mixture layer (end area formed by slitting) is constituted by a first positive electrode mixture layer containing small particles of a first positive electrode active material, while the remaining part (central area) is constituted by a second positive electrode mixture layer containing large particles of a second positive electrode active material having an average particle diameter of 9 $\mu$m or more, a decrease in productivity can be suppressed while ensuring performance (liquid circulation property) of the positive electrode.

In view of improving productivity (increasing slitting blade lifetime), the widths of the 1a region (1a positive electrode mixture layer) and the 1b region (1b positive electrode mixture layer) are, preferably, each 1% or more (or 4% or more) of the width of the positive electrode current collector (positive electrode mixture layer). In view of enhancing the liquid circulation property of the positive electrode mixture layer, the widths of the 1a region (1a positive electrode mixture layer) and the 1b region (1b positive electrode mixture layer) are, preferably, each 20% or less (15% or less) of the width of the positive electrode current collector (positive electrode mixture layer). The width of the positive electrode current collector (positive electrode mixture layer) is a width obtained by summing the widths of the first region (first positive electrode mixture layer) and the second region (second positive electrode mixture layer).


(Average Particle Diameters D1 and D2)


The end faces of the first positive electrode mixture layer (1a positive electrode mixture layer and 1b positive electrode mixture layer) at the respective ends of the positive electrode in the widthwise direction are formed by slitting. When the average particle diameter D1 of the first positive electrode active material in the first positive electrode mixture layer is 7 $\mu$m or less, the particles of the first positive electrode active material are so small as to inhibit biting into the slitting blade. Slitting blade damage due to particle biting can be reduced to reduce frequency of replacement of the slitting blade, thereby suppressing a decrease in productivity. In view of further improving productivity, D1 is more preferably 4 $\mu$m or less. However, when D1 is smaller than 1 $\mu$m, handleability of the positive electrode active material is decreased, which is disadvantageous in terms of productivity of the positive electrode.

When the average particle diameter D2 of the second positive electrode active material in the second positive electrode mixture layer is 9 $\mu$m or more, voids in the second positive electrode mixture layer are so large as to enhance the liquid circulation property of the positive electrode mixture layer. In view of enhancing the liquid circulation property of the positive electrode mixture layer, D2 is preferably 10 $\mu$m or more, and more preferably 20 $\mu$m or more. However, when D2 is larger than 30 $\mu$m, coatability of a positive electrode slurry and compressibility of the positive electrode mixture layer are decreased, which are disadvantageous in terms of productivity of the positive electrode.

D1 and D2 can be determined as follows.

A cross section sample of a positive electrode in the thickness direction is obtained by simultaneously cutting a positive electrode mixture layer and a positive electrode current collector in the widthwise direction of the positive electrode. In doing so, the cross section may be processed using a cross section polisher (CP) to obtain the cross section sample. Next, the cross section of the positive electrode mixture layer in the cross section sample is observed using a scanning electron microscope (SEM).

Specifically, observation is performed within an end area in the cross section of the positive electrode mixture layer using a SEM. Here, the end edge area is an area of the positive electrode mixture layer where the distance from one of the end faces of the positive electrode mixture layer in the widthwise direction is 1% or less of the dimension of the positive electrode mixture layer in the widthwise direction. Ten or more positive electrode active material particles are arbitrarily selected in the end edge area. Equivalent circle diameters of the cross sections of the selected positive electrode active material particles are obtained by image processing, and the average is obtained as D1.

Next, observation is performed within the central area in the cross section of the positive electrode mixture layer using a SEM. Here, the central area is an area of the positive electrode mixture layer where the distance from one of the end faces of the positive electrode mixture layer in the widthwise direction is between 40% and 60% of the dimension of the positive electrode mixture layer in the widthwise direction dimension. Ten or more positive electrode active material particles are arbitrarily selected in the central area. Equivalent circle diameters of the cross sections of the selected positive electrode active material particles are obtained by image processing, and the average is obtained as D2.

A plurality of cross section samples may be used to determine D1 and D2. The equivalent circle diameter of a positive electrode active material particle refers to the diameter of a circle having the same area as the area of the cross section of the positive electrode active material particle. The positive electrode active material particles may include secondary particles formed as a result of aggregation of a plurality of primary particles. As for the secondary particles, the equivalent circle diameter of a secondary particle is the diameter of a circle having the same area as the cross sectional area of the secondary particle.

When the first positive electrode active material and the second positive electrode active material can be collected from the positive electrode mixture layer (or in the second step and the third step in the positive electrode production method described later), the median diameters (particle diameters at a cumulative volume of 50%) of the first positive electrode active material and the second positive electrode active material in a volume-based particle size distribution may be determined as D1 and D2, respectively. The volume-based particle size distribution can be measured by laser diffraction scattering. For measurement, a measuring device "LA-750" produced by HORIBA, Ltd. can be used as the measuring device.

(positive Electrode Active Material)

For the positive electrode active material, a material (e.g., a later-described composite oxide containing lithium and a transition metal) capable of absorbing and releasing lithium ions is used. In view of improving productivity, the first positive electrode active material and the second positive electrode active material are preferably of the same type (in chemical structure or composition). In this case, the first positive electrode active material and the second positive electrode active material can be easily adjusted to have substantially the same single-particle fracture strength.

When the first positive electrode active material and the second positive electrode active material have substantially the same single-particle fracture strength, adjustment of the average particle diameters D1 and D2 to within specific ranges makes it easy to simultaneously achieve extension of slitting blade lifetime and enhancement of liquid absorption of the positive electrode (liquid circulation property of the positive electrode mixture layer). In addition, variation in the degree of crack formation of the positive electrode active material particles in the positive electrode mixture layer associated with charge and discharge cycles can be reduced.

When the single-particle fracture strength is substantially the same, the first positive electrode active material and the second positive electrode active material may differ in type (chemical structure or composition).

Note that "the single-particle fracture strength is substantially the same" means that given that F1 and F2 represent the single-particle fracture strength of the first positive electrode active material and the single-particle fracture strength of the second positive electrode active material, respectively, F1/F2 is 0.8 or more and 1.2 or less. F1/F2 may be 0.9 or more and 1.1 or less.

In view of extending slitting blade lifetime, the single-particle fracture strength of the first positive electrode active material may be smaller than that of the second positive electrode active material. F1/F2 may be less than 1.0, or may be 0.8 or less.

The single-particle fracture strength can be measured using a commercially available measuring device (e.g., a micro-compression tester (MCT-W201) produced by SHIMADZU CORPORATION) in the following manner.

(1) Particles of a positive electrode active material are scattered onto a lower pressurization plate (SKS flat plate) of the measuring device.
(2) Particles as measurement targets are selected using an optical microscope to measure their particle diameters. The particle diameters herein are equivalent circle diameters of the particles (diameters of circles having the same areas as the areas of the particles) determined in a particle image captured using an optical microscope.
(3) Using a diamond flat indenter having a diameter of 50 $\mu$m as an upper pressurizer, only one particle selected as a sample is set to be present between the upper pressurizer and the lower pressurization plate.
(4) The upper pressurizer is brought down slowly, and a load is applied at a constant acceleration (specifically, a displacement speed of 2.7 mN/sec) from the time when the upper pressurizer contacts the sample (the lowering speed changes).
(5) The relationship between the load and the amount of deformation of the sample is determined. Taking the point at which the amount of deformation of the sample changed abruptly (inflection point of a load-to-deformation profile) as a fracture point, the fracture strength is calculated based on the following equation using the particle diameter and the load at that time. The fracture strength is measured 5 times and an average is calculated.

$$St = 2.8 \, P/\pi d^2$$

St: fracture strength [MPa or N/mm$^2$]
P: load [N]
d: particle diameter [mm]

(positive Electrode Mixture Layer)

In view of extending slitting blade lifetime, the amount of the positive electrode mixture layer caried on the surface of the positive electrode current collector is preferably 450 mg/10cm$^2$ or less, more preferably 400 mg/10cm$^2$ or less, and further preferably 300 mg/10cm$^2$ or less. In view of increasing the energy density, the amount of the positive electrode mixture layer carried is preferably 100 mg/10cm$^2$ or more. The amount of the positive electrode mixture layer carried means the mass of the positive electrode mixture layer carried per10 cm$^2$ of one of the surfaces of the positive electrode current collector.

The density of the positive electrode mixture layer is preferably 2 g/cm$^3$ or more (or 2.5 g/cm$^3$ or more) and 4 g/cm$^3$ or less. When the density of the positive electrode mixture layer is 2 g/cm$^3$ or more, a high energy density is likely to be obtained. When the density of the positive electrode mixture layer is 4 g/cm$^3$ or less, slitting blade lifetime can be easily extended. The density of the positive electrode mixture layer may be 3.5 g/cm$^3$ or less.

Preferably, the positive electrode mixture layer contains a binder. As the binder, any of those exemplified later can be used. In view of extending slitting blade lifetime, the percentage content of the binder in the positive electrode mixture layer is preferably 0.2% by mass or more and 7% by mass or less. In view of extending slitting blade lifetime and ensuring the amount of the positive electrode active material carried, the percentage content of the binder in the positive electrode mixture layer is more preferably 0.2% by mass or more and 5% by mass or less, and further preferably 2% by mass or more and 5% by mass or less. The percentage content of the binder means a rate (percentage) of the mass of the binder to the total mass of the positive electrode mixture layer.

From the point of view of uniformity of the positive electrode mixture layer and productivity of the positive electrode, preferably, the first positive electrode mixture layer and the second positive electrode mixture layer have substantially the same amount carried on the positive electrode current collector, substantially the same percentage content of the binder, and substantially the same density. From the same point of view, the positive electrode mixtures of the first positive electrode mixture layer and the second positive electrode mixture layer preferably contain the same materials such as the binder. From the same point of view, preferably, the blending ratios of the materials contained in the respective positive electrode mixtures, such as the positive electrode active material and the binder, are substantially the same.

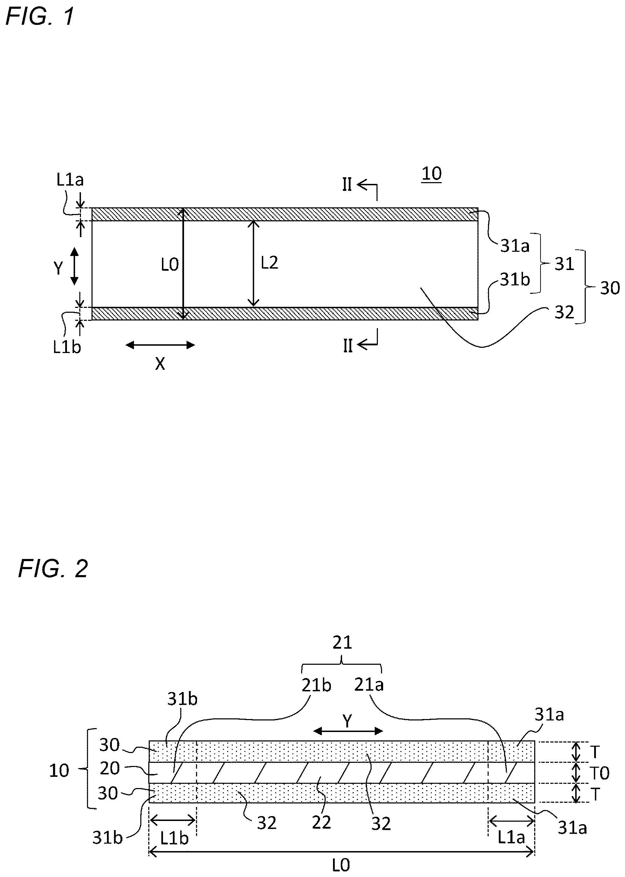

FIG. 1 is a schematic top view of an example of a secondary battery positive electrode according to an embodiment of the present disclosure. FIG. 2 is a schematic cross-sectional view of the example of the secondary battery positive electrode according to the embodiment of the present disclosure. In FIG. 1, X and Y indicate the longitudinal direction and the widthwise direction of a belt-shaped positive electrode, respectively. FIG. 2 shows a cross section in the direction of II-II in FIG. 1.

A positive electrode 10 includes a positive electrode current collector 20 having a belt shape and a positive electrode mixture layer 30 carried on both surfaces (main surfaces) of the positive electrode current collector 20. The positive electrode current collector 20 has a first region 21 and a second region 22. The first region 21 is an end area at both ends of the positive electrode current collector 20 in the widthwise direction, extending in the longitudinal direction of the positive electrode current collector 20. The second region 22 is a central area in the middle part of the positive electrode current collector 20 in the widthwise direction, extending in the longitudinal direction of the positive electrode current collector 20. The positive electrode mixture layer 30 includes a first positive electrode mixture layer 31 (hatched part in FIG. 1) carried on both surfaces of the first region 21 and a second positive electrode mixture layer 32 carried on both surfaces of the second region 22.

The first region 21 includes a 1a region 21a and a 1b region 21b, each extending in the longitudinal direction of the positive electrode current collector 20, at one end edge and the other end edge of the positive electrode current collector 20 in the widthwise direction, respectively. The first positive electrode mixture layer 31 includes a 1a positive electrode mixture layer 31a carried on both surfaces of the 1a region 21 and a 1b positive electrode mixture layer 31b carried on both surfaces of the 1b region 21.

The positive electrode current collector 20 (positive electrode mixture layer 30) has a width L0. The a1 region 21a (1a positive electrode mixture layer 31a) has a width L1a, and the 1b region 21b (1b positive electrode mixture layer 31b) has a width L1b.

In view of improving productivity, L1a/L0 and L1b/L0 are, preferably, each 1/100 or more, and more preferably 4/100 or more.

In view of ensuring the liquid circulation property of the positive electrode mixture layer (ensuring the second region 22 and the second positive electrode mixture layer 32 region), L1a/L0 and L1b/L0 are, preferably, each 20/100 or less, and more preferably 15/100 or less.

Preferably, L1a and L1b are almost the same, but they may differ. L1a/L1b is 0.90 or more and 1.1 or less, for example.

The second region 22 is a central area in the middle part of the positive electrode current collector 20 in the widthwise direction, extending in the longitudinal direction of the positive electrode current collector 20. The second region 22 (second positive electrode mixture layer 32) has a width L2. L2 is a value subtracting the sum of L1a and L1b from L0.

The first positive electrode mixture layer 31 (1a positive electrode mixture layer 31a and 1b positive electrode mixture layer 31b) contains a first positive electrode active material, while the second positive electrode mixture layer 32 contains a second positive electrode active material. The average particle diameter D1 of the first positive electrode active material is 1 $\mu$m or more and 7 $\mu$m or less. The average particle diameter D2 of the second positive electrode active material is 9 $\mu$m or more and 30 $\mu$m or less.

The thickness (T in FIG. 2) of the positive electrode mixture layer 30 carried on one of the surfaces of the positive electrode current collector 20 may be 80 $\mu$m or more, or may be 100 $\mu$m or more. The upper limit of the thickness of the positive electrode mixture layer 30 is, but is not limited to, about 300 $\mu$m, for example. The thickness (T0 in FIG. 2) of the positive electrode current collector 20 is 1 $\mu$m or more and 50 $\mu$m or less, for example.

[Production Method for Secondary Battery Positive Electrodes]

A production method for secondary battery positive electrodes according to an embodiment of the present disclosure includes the following first to sixth steps.

First step: Preparing a current collector sheet having first regions and second regions that alternate in a striped pattern.

Second step: Preparing a first positive electrode slurry containing a first positive electrode active material. The average particle diameter D1 of the first positive electrode active material is 1 $\mu$m or more and 7 $\mu$m or less.

Third step: Preparing a second positive electrode slurry containing a second positive electrode active material. The average particle diameter D2 of the second positive electrode active material is 9 $\mu$m or more and 30 $\mu$m or less.

Fourth step: Forming a first positive electrode mixture layer by applying the first positive electrode slurry to the surface of the first regions, followed by drying.

Fifth step: Forming a second positive electrode mixture layer by applying the second positive electrode slurry to the surfaces the second regions, followed by drying.

Sixth step: Cutting within the first regions in the longitudinal direction of the first regions together with the first positive electrode mixture layer in a stacked intermediate of the first positive electrode mixture layer, the second positive electrode mixture layer, and the current collector sheet. In the manner descried above, a plurality of belt-shaped positive electrode are obtained.

(First Step: Current Collector Sheet Preparation)

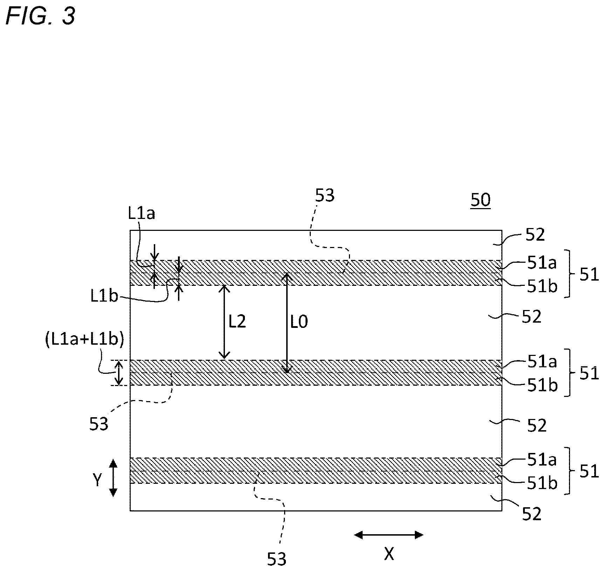

FIG. 3 is a schematic top view of an example of the current collector sheet prepared in the first step. FIG. 3 illustrates a part of the current collector sheet. In FIG. 3, X and Y indicate the longitudinal direction and the widthwise direction of the current collector sheet, respectively.

A current collector sheet 50 has first regions 51 (hatched parts in FIG. 3) and second regions 52 that alternate in a striped pattern. Each of the first regions 51 includes a cutting part 53 indicated by alternate long and short dash lines in FIG. 3. The cutting part 53 extends in the longitudinal direction of the first region in the first region 51, and is to be cut by slitting in the sixth step. The first regions 51 have a width (L1a + L1b). The second regions 52 have a width L2. L0 is the sum of L1a, L1b, and L2.

As the current collector sheet 50, a conductive sheet that can be used as a positive electrode current collector can be used. For example, a non-perforated conductive substrate (e.g., a metal foil) or a perforated conductive substrate (e.g., a mesh member, a net member, or a punched sheet) can be used. Examples of the material of the current collector sheet 50 include aluminum, aluminum alloys, stainless steel, and titanium. The thickness of the current collector sheet 50 may be 1 $\mu$m or more and 50 $\mu$m or less, for example.

(Second and Third Steps: Positive Electrode Slurry Preparation)

A first (second) positive electrode slurry containing a first (second) positive electrode active material is prepared. The average particle diameter D1 of the first positive electrode active material is 1 $\mu$m or more and 7 $\mu$m or less. The average particle diameter D2 of the second positive electrode active material is 9 $\mu$m or more and 30 $\mu$m or less.

The first (second) positive electrode slurry is prepared, for example, by dispersing a first (second) positive electrode mixture in a dispersing medium. The first (second) positive electrode mixture contains the first (second) positive electrode active material as an essential component, and may contain, for example, a binder and a conductive agent as optional components. As the binder and the conductive agent, those exemplified later can be used. As the dispersing medium, any of alcohols, ethers, N-methyl-2-pyrrolidone (NMP) can be used, for example.

(Fourth and Fifth Steps: Positive Electrode Mixture Layer Formation)

The first (second) positive electrode slurry is applied to surfaces of the first (second) regions and dried to form first (second) positive electrode mixture layers. The dried coated film may be rolled as necessary. The density of the positive electrode mixture layer formed may be adjusted by rolling. The first (second) positive electrode slurry may be applied to one surface of each first (second) region or to both surfaces of the first (second) region. From the point of view of productivity, the fourth step and the fifth step may be performed simultaneously. The first positive electrode slurry and the second positive electrode slurry may be simultaneously applied to the surface(s) of the positive electrode current collector using a dual fluid nozzle.

Through the fourth step and the fifth step, a stacked intermediate is obtained of the current collector and the positive electrode mixture layer (the first positive electrode mixture layers carried on the surfaces of the first regions and the second positive electrode mixture layers carried on the surfaces of the second regions).

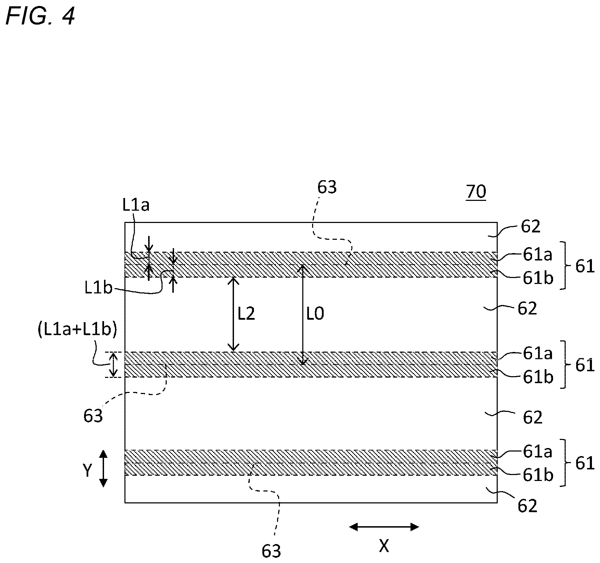

FIG. 4 is a schematic top view of an example of the stacked intermediate produced through the fourth step and the fifth step. FIG. 4 illustrates a part of the stacked intermediate. In FIG. 4, X and Y indicate the longitudinal direction and the widthwise direction of the stacked intermediate, respectively.

A stacked intermediate 70 includes a current collector sheet 50 and a positive electrode mixture layer 60 carried on both surfaces of the current collector sheet 50. The positive electrode mixture layer 60 includes first positive electrode mixture layers 61 (hatched parts in FIG. 4) carried on both surfaces of respective first regions 51 of the current collector sheet 50, and second positive electrode mixture layers 62 carried on both surfaces of respective second regions 52 of the current collector sheet 50. The first positive electrode mixture layers 61 and second positive electrode mixture layers 62 are arranged in alternating stripes. The first positive electrode mixture layers 61 are formed by applying the first positive electrode slurry to both surfaces of the first regions 51 and drying the resulting coated film. The second positive electrode mixture layers 62 are formed by applying the second positive electrode slurry to both sides of the second regions 52 and drying the resulting coated film. The first positive electrode mixture layers 61 have a width (L1a + L1b). The second positive electrode mixture layers 62 have a width L2. L0 is the sum of L1a, L1b, and L2. The first positive electrode mixture layers 61 include cutting parts 63 indicated by alternate long and short dash lines in FIG. 4. The cutting parts 63 extend in the first positive electrode mixture layers 61 in the longitudinal direction of the first positive electrode mixture layers 61, along which cutting is performed during slitting in the sixth step.

(Sixth Step: Slitting)

In the sixth step, cutting is performed within the first regions in the longitudinal direction of the first regions together with the first positive electrode mixture layers containing small particles of the first positive electrode active material in the stacked intermediate. In the sixth step, slitting of the stacked intermediate (cutting the first positive electrode mixture layers and the first regions using a slitting blade) is continuously performed using a slitting apparatus. By cutting within the first regions and within the first positive electrode mixture layers, the stacked intermediate is divided into belt-shaped pieces having a predetermined width. In the manner described above, a plurality of belt-shaped positive electrodes are obtained. As a result of the first positive electrode mixture layers of the positive electrode mixture layer being cut in the slitting, damage of the slitting blade is reduced.

In the stacked intermediate 70 in FIG. 4, the cutting parts 63 in the first positive electrode mixture layers 61 and the cutting parts 53 in first regions 51 are simultaneously cut by slitting. The stacked intermediate 70 is transported to the slitting apparatus, and cutting within the first positive electrode mixture layers 61 and the first regions 51 is continuously performed. Cutting divides each first region 51 into a 1a region 51a and a 1b region 51b, and divides each first positive electrode mixture layer 61 into a 1a positive electrode mixture layer 61b carried on both surfaces of the 1a region 51a and a 1b positive electrode mixture layer 61a carried on both surfaces of the 1b region 51b. The 1a regions 51a and the 1a positive electrode mixture layers 61a each have a width L1a. The 1b regions 51b and the 1b positive electrode mixture layers 61b each have a width L1b. Preferably, L1a/L0 and L1b/L0 are within the ranges exemplified previously.

[Secondary Battery]

A secondary battery according to an embodiment of the present disclosure includes a positive electrode, a negative electrode, and a liquid electrolyte. The positive electrode is the secondary battery positive electrode described above. As a result of the positive electrode having a good liquid circulation property, the secondary battery can have good load characteristics (quick charge properties). In addition, improvement of productivity of the positive electrode improves productivity of the secondary battery. The secondary battery includes at least lithium-ion batteries and nonaqueous electrolyte secondary batteries such as lithium-metal secondary batteries. Hereinafter, the secondary battery will be described in detail.

(positive Electrode)

The positive electrode includes a positive electrode current collector and a positive electrode mixture layer carried on a surface of the positive electrode current collector. The positive electrode mixture layer can be formed by applying a positive electrode slurry of a positive electrode mixture dispersed in a dispersion medium to a surface of the positive electrode current collector, followed by drying. The dried coated film may be rolled as necessary. The positive electrode mixture layer may be formed on one surface of the positive electrode current collector, or may be formed on both surfaces thereof.

The positive electrode mixture contains a positive electrode active material as an essential component, and can contain, for example, a binder and a conductive agent as optional components.

As the positive electrode active material, a material capable of absorbing and releasing lithium ions can be used, and any known material can be used. Composite oxides containing lithium and a transition metal can be exemplified as the positive electrode active material. Examples of the composite oxides include $Li_aCoO_2$, $Li_aNiO_2$, $Li_aMnO_2$, $Li.Co_bNi_{1-b}O_2$, $Li_aCo_{1-b}M_bO_c$, $Li_aNi_{1-b}M_bO_c$, $Li_aMn_2O_4$, $Li_aMn_{2-b}M_bO_4$, $LiMePO_4$, and $Li_2MePO_4F$. Here, M is at least one selected from the group consisting of Na, Mg, Sc, Y, Mn, Fe, Co, Ni, Cu, Zn, Al, Cr, Pb, Sb, and B. Me includes at least a transitional element (e.g., including at least one selected from the group consisting of Mn, Fe, Co, and Ni). Here, $0 \leq a \leq 1.2$, $0 \leq b \leq 0.9$, and $2.0 \leq c \leq 2.3$ are satisified. Note that the value "a" indicating the molar ratio of lithium is increased and decreased by charging and discharging.

Examples of the binder may include fluorocarbon resins, polyolefin resins, polyamide resins, polyimide resins, vinyl resins, styrene-butadiene copolymer rubber (SBR), polyacrylic acid, and their derivatives. Examples of the fluorocarbon resins include polyvinylidene fluoride (PVDF), polytetrafluoroethylene (PTFE), tetrafluoroethylene-hexafluoropropylene copolymers, and vinylidene fluoride-hexafluoropropylene copolymers.

As the conductive agent, any of the same ones as those exemplified for the negative electrode can be used. As the conductive agent, graphite such as natural graphite or artificial graphite may be used.

The shape and thickness of the positive electrode current collector can be selected from the shape and range according to the negative electrode current collector, respectively. Examples of the material of the positive electrode current collector include stainless steel, aluminum, aluminum alloys, and titanium.

(Negative Electrode)

The negative electrode includes a negative electrode current collector and a negative electrode mixture layer carried on a surface of the negative electrode current collector, for example. The negative electrode mixture layer can be formed, for example, by applying a negative electrode slurry of a negative electrode mixture dispersed in a dispersing medium to a surface of the negative electrode current collector, followed by drying. The dried coated film may be rolled as necessary. The negative electrode mixture layer may be formed on one surface of the negative electrode current collector, or may be formed on both surfaces thereof. The negative electrode may include a negative electrode current collector and a lithium metal foil or a lithium alloy foil carried on the negative electrode current collector.

The negative electrode mixture contains a negative electrode active material as an essential component, and may contain, for example, a binder, a conductive agent, and a thickener as optional components.

The negative electrode active material contains a lithium metal, a lithium alloy, or a material capable of absorbing and releasing lithium ions, for example. As the material capable of absorbing and releasing lithium ions, a carbon material or an alloy-based material is used. Examples of the carbon material include graphite, graphitizable carbon (soft carbon), and non-graphitizable carbon (hard carbon). Among these, graphite is preferable because of having small irreversible capacity loss and excellent stability during charging and discharging. Examples of the alloy-based material include those containing at least one metal capable of forming an alloy with lithium, and examples thereof include silicon, tin, silicon alloys, tin alloys, and silicon compounds. For example, silicon oxide or tin oxide in which any of these are bonded to oxygen may be used.

The silicon-containing alloy-based material may be a composite material including a lithium-ion conductive phase and silicon phases (silicon particles) dispersed in the lithium-ion conductive phase. As the lithium-ion conductive phase, a silicon oxide phase, a silicate phase, or a carbon phase can be used, for example. The main component (e.g., 95 to 100% by mass) of the silicon oxide phase may be silicon dioxide. The carbon phase may be constituted by non-crystalline carbon (i.e., amorphous carbon) having low crystallinity, for example. The non-crystalline carbon may be hard carbon, soft carbon, or another carbon, for example. The composite material may be used together with a carbon material.

A lithium-containing silicate phase (lithium-silicate phase) is preferable because of its small irreversible capacity loss and high initial charge and discharge efficiency. The lithium-silicate phase should be an oxide phase containing lithium (Li), silicon (Si), and oxygen (O), and may contain another element. Examples of the other element include iron (Fe), chromium (Cr), nickel (Ni), manganese (Mn), copper (Cu), molybdenum (Mo), zinc (Zn), and aluminum (Al). The lithium-silicate phase can have a composition represented by formula: $Li_{2z}SiO_{2+z}$ ($0 < z < 2$). The lithium-silicate phase may contain $Li_2SiO_3$ or $Li_2Si_2O_5$, for example.

As the binder, those exemplified for the positive electrode can be used. Examples of the conductive agent include carbon black, conductive fibers, fluorinated carbon, and organic conductive materials. Examples of the thickener include carboxymethylcellulose (CMC) and polyvinyl alcohol.

As the negative electrode current collector, a non-perforated conductive substrate (e.g., metal foil) or a perforated conductive substrate (e.g., a mesh body, a net body, or a punched sheet) is used. Examples of the material of the negative electrode current collector include stainless steel, nickel, nickel alloys, copper, and copper alloys.

(Liquid Electrolyte)

The liquid electrolyte contains a solvent and a solute dissolved in the solvent. The solute is an electrolyte salt that dissociates into ions in the liquid electrolyte. The solute can contain a lithium salt, for example. Components of the liquid electrolyte other than the solvent and the solute are additives. Various additives may be contained in the liquid electrolyte.

As the solvent, a water-based solvent or a non-aqueous solvent is used. As the non-aqueous solvent, a cyclic carbonic acid ester, a chain carbonic acid ester, a cyclic carboxylic acid ester, or a chain carboxylic acid ester is used, for example. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include methylacetate, ethylacetate, propyl acetate, methyl propionate (MP), and ethyl propionate (EP). One of the above non-aqueous solvents may be used singly, or two or more thereof may be used in combination.

Examples of the lithium salt that can be used include lithium salts of chlorine-containing acids (e.g., $LiClO_4$, $LiAlCl_4$, and $LiB_{10}Cl_{10}$), lithium salts of fluorine-containing acids (e.g., $LiPF_6$, $LiPF_2O_2$, $LiBF_4$, $LiSbF_6$, $LiAsF_6$, $LiCF_3SO_3$, and $LiCF_3CO_2$), lithium salts of fluorine-containing acid imides (e.g., $LiN (FSO_2)_2$, $LiN(CF_3SO_2)_2$, $LiN(CF_3SO_2)(C_4F_9SO_2)$, and $LiN(C_2F_5SO_2)_2$), and lithium halides (e.g., LiCl, LiBr, and LiI). One of the above lithium salts may be used singly, or two or more thereof may be used in combination.

The concentration of the lithium salt in the liquid electrolyte may be 1 mol/liter or more and 2 mol/liter or less, or may be 1 mol/liter or more and 1.5 mol/liter or less. By controlling the concentration of the lithium salt within the above range, a liquid electrolyte having excellent ionic conductivity and moderate viscosity can be obtained. However, the concentration of the lithium salt is not limited to the above.

(Separator)

It is desirable to provide a separator between the positive electrode and the negative electrode. The separator is excellent in ion permeability and has moderate mechanical strength and insulating properties. Examples of the separator that can be used include microporous thin films, woven fabrics, and nonwoven fabrics. As the material of the separator, a polyolefin such as polypropylene or polyethylene is preferable.

One example of the configuration of the secondary battery includes a configuration in which an electrode group of the positive electrode and the negative electrode would with the separators therebetween is accommodated in an outer body together with the liquid electrolyte. However, the configuration is not limited to this, and any other form of the electrode group may be adopted. For example, a stacked electrode group in which the positive electrode and the negative electrode are stacked via the separator may be used. The shape of the battery is not limited and may be cylindrical, prismatic, coin-shaped, button-shaped, or a laminated, for example.

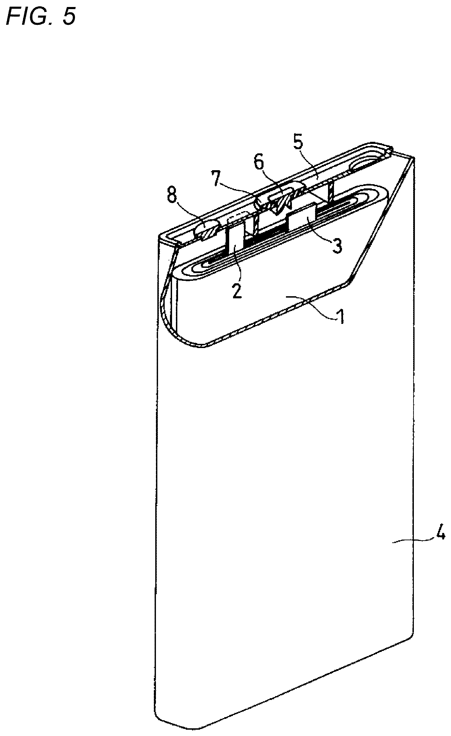

With reference to FIG. 5, the configuration of a prismatic secondary battery will be described below as an example of the secondary battery of the present disclosure.

The battery includes a bottomed prismatic battery case 4, and an electrode group 1 and a liquid electrolyte (not illustrated) accommodated in the battery case 4. The electrode group 1 has a long belt-shaped negative electrode, a long belt-shaped positive electrode, and a separator therebetween. The negative electrode current collector of the negative electrode is electrically connected via a negative electrode lead 3 to a negative electrode terminal 6 provided on a sealing plate 5. The negative electrode terminal 6 is insulated from the sealing plate 5 by a resin-made gasket 7. The positive electrode current collector of the positive electrode is electrically connected to the back surface of the sealing plate 5 via a positive electrode lead 2. That is, the positive electrode is electrically connected to the battery case 4 which also serves as a positive electrode terminal. The periphery of the sealing plate 5 is fitted to the open end of the battery case 4, and the fitting portion is laser-welded. The sealing plate 5 has a liquid electrolyte injection hole, which is blocked by a sealing plug 8 after injection.

< Supplementary Notes>

According to the above description of the embodiment, the following techniques are disclosed.

(Technique 1)

A secondary battery positive electrode including: a positive electrode current collector having a belt shape; and a positive electrode mixture layer carried on a surface of the positive electrode current collector, wherein

the positive electrode current collector has a first region and a second region,
the first region is an end area at both ends of the positive electrode current collector in a widthwise direction of the positive electrode current collector, extending in a longitudinal direction of the positive electrode current collector,
the second region is a central area in a middle part of the positive electrode current collector in the widthwise direction, extending in the longitudinal direction of the positive electrode current collector,
the positive electrode mixture layer includes a first positive electrode mixture layer carried on a surface of the first region, and a second positive electrode mixture layer carried on a surface of second region,
the first positive electrode mixture layer contains a first positive electrode active material,
the second positive electrode mixture layer contains a second positive electrode active material,
an average particle diameter D1 of the first positive electrode active material is 1 $\mu$m or more and 7 $\mu$m or less, and
an average particle diameter D2 of the second positive electrode active material is 9 $\mu$m or more and 30 $\mu$m or less.

(Technique 2)

The secondary battery positive electrode according to Technique 1, wherein an amount of the positive electrode mixture layer carried on the surface of the positive electrode current collector is 100 mg/10cm$^2$ or more and 400 mg/10cm$^2$ or less.

(Technique 3)

The secondary battery positive electrode according to Technique 1 or 2, wherein a density of the positive electrode mixture layer is 2.5 g/cm$^3$ or more and 4 g/cm$^3$ or less.

(Technique 4)

The secondary battery positive electrode according to any of Techniques 1 to 3, wherein the positive electrode mixture layer contains a binder of 0.2% by mass or more and 5% by mass or less.

(Technique 5)

The secondary battery positive electrode according to any of Techniques 1 to 4, wherein

the first region includes a 1a region and a 1b region, each extending in the longitudinal direction of the positive electrode current collector, at one end edge and another end edge of the positive electrode current collector in the widthwise direction of the positive electrode current collector, respectively, and widths of the 1a region and the 1b region are each 1% or more and 20% or less of a width of the positive electrode current collector.

(Technique 6)

A secondary battery including: a positive electrode; a negative electrode; and a liquid electrolyte, wherein the positive electrode is the secondary battery positive electrode according to any one of Techniques 1 to 5.

(Technique 7)

A production method for secondary battery positive electrodes, including:

a first step of preparing a current collector sheet having first regions and second regions that alternate in a striped pattern;
a second step of preparing a first positive electrode slurry containing a first positive electrode active material;
a third step of preparing a second positive electrode slurry containing a second positive electrode active material;
a fourth step of forming a first positive electrode mixture layer by applying the first positive electrode slurry to surfaces of the first regions, followed by drying;
a fifth step of forming a second positive electrode mixture layer by applying the second positive electrode slurry to surfaces of the second regions, followed by drying; and
a sixth step of obtaining a plurality of positive electrodes in a belt shape by cutting within the first regions in a longitudinal direction of the first regions together with the first positive electrode mixture layer in a stacked intermediate of the first positive electrode mixture layer, the second positive electrode mixture layer, and the current collector sheet, wherein
an average particle diameter D1 of the first positive electrode active material is 1 $\mu$m or more and 7 $\mu$m or less, and
an average particle diameter D2 of the second positive electrode active material is 9 $\mu$m or more and 30 $\mu$m or less.

(Technique 8)

The production method for secondary battery positive electrodes according to Technique 7, wherein the four step and the fifth step are performed simultaneously.
Hereinafter, the present disclosure will be specifically described based on Example and Comparative Examples, but present disclosure is not limited to Examples below.

[Example 1]

A positive electrode was prepared by the following steps.

(First Step: Current Collector Sheet Preparation)

A current collector sheet having first regions and second regions that alternate in a striped pattern was prepared. A wide aluminum foil (thickness T0: 15 $\mu$m) was used as the current collector sheet. The width of the first regions to the width of the second regions was set to 2:8.

(Second and Third Steps: Positive Electrode Slurry Preparation)

A first positive electrode slurry was prepared by mixing 100 parts by mass of a first positive electrode active material, 1.0 parts by mass of acetylene black being a conductive agent, 2 parts by mass of polyvinylidene fluoride being a binder, and an appropriate amount of N-methyl-2-pyrrolidone (NMP).
A second positive electrode slurry was prepared by mixing 100 parts by mass of a second positive electrode active material, 1.0 parts by mass of acetylene black being a conductive agent, 2 parts by mass of polyvinylidene fluoride being a binder, and an appropriate amount of NMP.

For the first positive electrode active material and the second positive electrode active material, composite oxides with a layered rock-salt type crystal structure containing Li, Ni, Co and Al, with different average particle diameters were used. The atomic ratio of Li, the sum of Ni, Co, and Al, and O was 1:1:2. The atomic ratio of Ni was the highest among Ni, Co, and Al.

The average particle diameter D1 of the first positive electrode active material and the average particle diameter D2 of the second positive electrode active material measured as median diameters in a volume-based particle size distribution by laser diffraction scattering were 4 $\mu$m and 20 $\mu$m, respectively.

(Fourth and Fifth Steps: Positive Electrode Mixture Layer Formation)

The first positive electrode slurry was applied to both surfaces of the first regions of the current collector sheet, and the resulting first coated films were dried. The second positive electrode slurry was applied to both surfaces of the second regions of the current collector sheet, and the resulting second coated films were dried. The first positive electrode slurry and the second positive electrode slurry were applied by die coating. Thereafter, a stack of the first coated films, the second coated films, and the current collector sheet was rolled to form a positive electrode mixture layer (first positive electrode mixture layers and second positive electrode mixture layers) on both surfaces of the current collector sheet. The density of the rolled positive electrode mixture layer (the first positive electrode mixture layers and the second positive electrode mixture layers) was set to 3.5 g/cm$^3$. The amount of the positive electrode mixture layer (the first positive electrode mixture layers and the second positive electrode mixture layers) carried on each surface of the current collector sheet was set to 300 mg/10cm$^2$.

(Sixth Step: Slitting)

Cutting was continuously performed within first regions in the longitudinal direction of the first regions together with the first positive electrode mixture layers in the stacked intermediate of the first positive electrode mixture layers, the second positive electrode mixture layers, and the current collector sheet to obtain a plurality of belt-shaped positive electrodes A1. That is, the slitting divided the first regions into 1a regions and 1b regions, and divides the first positive electrode mixture layers into 1a positive electrode mixture layers and 1b positive electrode mixture layers. Thus, positive electrodes were obtained that each included the second positive electrode mixture layer carried on the surfaces of the second region of the positive electrode current collector, and the 1a positive electrode mixture layer and the 1b positive electrode mixture layer respectively carried on the 1a region and the 1b region of the positive electrode current collector. The width of the 1a region and the 1b region each were 10% of the width of the positive electrode current collector (the total width of the 1a regions, the 1b region, and the second region).

One of the positive electrodes was cut in the widthwise direction to form a cross section in the thickness direction, and the cross section was processed using a cross section polisher (CP), thereby obtaining a sample cross section. A SEM image of the sample cross section was captured. By the aforementioned method, the average of the first equivalent circle diameters of ten or more particles of the first positive electrode active material was determined as D1, and the average of the second equivalent circle diameters of ten or more particles of the second positive electrode active material in the cross section was determined as D2. The averages D1 and D2 were in close agreement with D1 and D2 (i.e., 4 $\mu$m and 20 $\mu$m), respectively, determined as median diameters in the volume-based particle size distribution.

<<Examples 2 to 9 and Comparative Examples 1 to 7>>

Positive electrodes A2 to A9 of Example 2 to 9 and B1 to B7 of Comparative Examples 1 to 7 were produced by the same manner as for the battery A1 of Example 1, except that the average particle diameters D1 and D2 of the first positive electrode active material and the second positive electrode active material were set as shown in Table 1.

Each of the positive electrodes of Examples and Comparative Examples were evaluated as follows.

(Evaluation 1: Slitting Blade Lifetime)

Slitting was performed continuously to cut the stacked intermediate, and the time point when chipping (blade damage) and scratches were observed in the appearance of the slitting blade was defined as its end of life. The length of a positive electrode produced until the slitting blade reached its end of life was measured. The measurement values of the respective positive electrodes are expressed as relative values when the measurement value of the positive electrode A1 is taken as 100. A larger measurement value indicates longer blade lifetime and higher productivity of the positive electrode.

(Evaluation 2: Positive Electrode Liquid Absorption)

The positive electrode was fixed on a horizontal surface, and 0.3 μL of propylene carbonate (PC) being a solvent was added dropwise onto the surface of the positive electrode mixture layer. The time from the dropwise addition of the solvent to complete absorption of the solvent into the positive electrode mixture layer was measured. Liquid absorption was evaluated based on the measurement value for the positive electrode A1. Specifically, $\{100 - (10 \times n)\}$ was calculated when a measurement value T of the positive electrode fell within a range of $\{T0 + (60 \times n) - 30\}$ seconds or more and less than $\{T0 + (60 \times n) + 30\}$ seconds, and this value was used as a numerical value indicating its liquid absorption. Note that T0 (seconds) is a measurement value for A1, and n is an integer. For example, when T is (T0 - 90) seconds or more and less than (T0 - 30) seconds, n = -1 and the numerical value indicating the liquid absorption is 110. When T is (T0 + 30) seconds or more and less than (T0 + 90) seconds, n = 1 and the numerical value indicating the liquid absorption is 90. A larger numerical value indicating the liquid absorption indicates higher liquid absorption (liquid circulation property) of the positive electrode.

The evaluation results are shown in Table 1.

[Table 1]

| Positive electrode | First positive electrode mixture layer (end edge area) | Second positive electrode mixture layer (central area) | Positive electrode mixture layer | | | Evaluation | |
|---|---|---|---|---|---|---|---|
| | Average particle diameter D1 (μm) of first positive electrode active material | Average particle diameter D2 (μm) of second positive electrode active material | Amount carried (mg/10cm²) | Density (g/cm³) | Binder content (% by mass) | Slitting blade lifetime (relative value) | Positive electrode liquid absorption |
| A2 | 1 | 10 | 300 | 3.5 | 2 | 110 | 80 |
| A3 | 1 | 20 | 300 | 3.5 | 2 | 110 | 100 |
| A4 | 1 | 30 | 300 | 3.5 | 2 | 110 | 110 |
| A5 | 4 | 10 | 300 | 3.5 | 2 | 100 | 80 |
| A1 | 4 | 20 | 300 | 3.5 | 2 | 100 | 100 |
| A6 | 4 | 30 | 300 | 3.5 | 2 | 100 | 110 |
| A7 | 7 | 10 | 300 | 3.5 | 2 | 80 | 80 |
| A8 | 7 | 20 | 300 | 3.5 | 2 | 80 | 100 |
| A9 | 7 | 30 | 300 | 3.5 | 2 | 80 | 110 |
| B1 | 1 | 7 | 300 | 3.5 | 2 | 110 | 60 |
| B2 | 4 | 7 | 300 | 3.5 | 2 | 100 | 60 |
| B3 | 7 | 7 | 300 | 3.5 | 2 | 80 | 60 |
| B4 | 10 | 7 | 300 | 3.5 | 2 | 60 | 60 |
| B5 | 10 | 10 | 300 | 3.5 | 2 | 60 | 80 |
| B6 | 10 | 20 | 300 | 3.5 | 2 | 60 | 100 |
| B7 | 10 | 30 | 300 | 3.5 | 2 | 60 | 110 |

The positive electrodes A1 to A9, each of which included a first positive electrode mixture layer having an average particle diameter D1 of the first positive electrode active material of 7 μm or less and a second positive electrode mixture layer having an average particle diameter D2 of the second positive electrode active material of 9 μm or more, exhibited improved liquid absorption and longer slitting blade lifetime, which resulted in improved productivity.

The positive electrodes B1 to B4, each of which included a second positive electrode mixture layer having an average particle diameter D2 of the second positive electrode active material of less than 9 μm, had decreased liquid

absorption. The positive electrodes B4 to B7, each of which included a first positive electrode mixture layer having an average particle diameter D1 of the first positive electrode active material of more than 7 $\mu$m, had reduced slitting blade lifetime.

<<Examples 10 to 12>>

Positive electrodes A10 to A12 of Example 10 to 12 were produced and evaluated by the same manner as for the battery A1 of Example 1, except that the amount of the positive electrode mixture layer (the first positive electrode mixture layer and the second positive electrode mixture layer) carried on each surface of the current collector sheet was set to those shown in Table 2 by adjusting the amount of the positive electrode slurries (first positive electrode slurry and second positive electrode slurry) applied. The evaluation results are shown in Table 2. Table 2 also shows the results for the positive electrode A1.

[Table 2]

| Positive electrode | First positive electrode mixture layer (end edge area) | Second positive electrode mixture layer (central area) | Positive electrode mixture layer | | | Evaluation | |
|---|---|---|---|---|---|---|---|
| | Average particle diameter D1 ($\mu$m) of first positive electrode active material | Average particle diameter D2 ($\mu$m) of second positive electrode active material | Amount carried (mg/10cm$^2$) | Density (g/cm$^3$) | Binder content (% by mass) | Slitting blade lifetime (relative value) | Positive electrode liquid absorption |
| A10 | 4 | 20 | 100 | 3.5 | 2 | 120 | 100 |
| A1 | 4 | 20 | 300 | 3.5 | 2 | 100 | 100 |
| A11 | 4 | 20 | 400 | 3.5 | 2 | 90 | 100 |
| A12 | 4 | 20 | 450 | 3.5 | 2 | 70 | 100 |

All of the positive electrodes A1 and A10 to A12, with an amount of each positive electrode mixture layer carried of 100 to 450 mg/10cm$^2$, exhibited improved liquid absorption and long slitting blade lifetime, resulting in improved productivity. Among them, the positive electrodes A1, A10, and A11, with an amount of each positive electrode mixture layer carried of 100 to 400 mg/10cm$^2$, exhibited longer slitting blade lifetime, resulting in improved productivity.

<<Examples 13 and 14>>

Positive electrodes A13 and A14 of Example 13 and 14 were produced and evaluated by the same manner as for the battery A1 of Example 1, except that the density of the positive electrode mixture layer (the first positive electrode mixture layers and the second positive electrode mixture layers) was set to those shown in Table 3 by adjusting the degree of compression during rolling. The evaluation results are shown in Table 3. Tables 3 also show the results for the positive electrode A1.

[Table 3]

| Positive electrode | First positive electrode mixture layer (end edge area) | Second positive electrode mixture layer (central area) | Positive electrode mixture layer | | | Evaluation | |
|---|---|---|---|---|---|---|---|
| | Average particle diameter D1 ($\mu$m) of first positive electrode active material | Average particle diameter D2 ($\mu$m) of second positive electrode active material | Amount carried (mg/10cm$^2$) | Density (g/cm$^3$) | Binder content (% by mass) | Slitting blade lifetime (relative value) | Positive electrode liquid absorption |
| A13 | 4 | 20 | 300 | 2.5 | 2 | 110 | 120 |
| A1 | 4 | 20 | 300 | 3.5 | 2 | 100 | 100 |
| A14 | 4 | 20 | 300 | 4.0 | 2 | 80 | 80 |

All of the positive electrodes A1, A13, and A14, with a density of the positive electrode mixture layer of 2.5 to 4.0 g/cm$^3$, exhibited improved liquid absorption and long slitting blade lifetime, resulting in improved productivity. Among them, the positive electrodes A1 and A13, with a density of the positive electrode mixture layer of 2.5 to 3.5 g/cm$^3$, achieved excellent liquid absorption and improved productivity.

<<Examples 15 to 17>>

Positive electrodes A15 to A17 of Example 15 to 17 were produced and evaluated by the same manner as for the battery A1 of Example 1, except that the content of the binder (polyvinylidene fluoride) in the positive electrode mixture layer (first positive electrode mixture layer and second positive electrode mixture layer) was set to those shown in Table 4. The evaluation results are shown in Table 4. Table 4 also shows the results for the positive electrode A1.

[Table 4]

| Positive electrode | First positive electrode mixture layer (end edge area) | Second positive electrode mixture layer (central area) | Positive electrode mixture layer | | | Evaluation | |
|---|---|---|---|---|---|---|---|
| | Average particle diameter D1 ($\mu$m) of first positive electrode active material | Average particle diameter D2 ($\mu$m) of second positive electrode active material | Amount carried (mg/10cm$^2$) | Density (g/cm$^3$) | Binder content (% by mass) | Slitting blade lifetime (relative value) | Positive electrode liquid absorption |
| A15 | 4 | 20 | 300 | 3.5 | 0.2 | 80 | 100 |
| A1 | 4 | 20 | 300 | 3.5 | 2 | 100 | 100 |
| A16 | 4 | 20 | 300 | 3.5 | 5 | 90 | 100 |
| A17 | 4 | 20 | 300 | 3.5 | 7 | 80 | 100 |

All of the positive electrodes A1 and A15 to A17, with a binder content of 0.2 to 7% by mass, exhibited improved liquid absorption and long slitting blade lifetime, resulting in improved productivity. Among them, the positive electrodes A1 and A16, with a binder content of 2 to 5% by mass, exhibited further longer slitting blade lifetime, resulting in further improved productivity.

[Industrial Applicability]

The secondary battery according to the present disclosure is useful as a main power source of a mobile communication device, an electric vehicle, a hybrid vehicle, or a portable electronic device, for example.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

[Reference Signs List]

1: electrode group, 2: positive electrode lead, 3: negative electrode lead, 4: battery case, 5: sealing plate, 6: negative electrode terminal, 7: gasket, 8: sealing plug, 10: positive electrode, 20: positive electrode current collector, 21, 51: first region, 21a, 51a; 1a region, 21b, 51b; 1b region, 22, 52: second region, 30: positive electrode mixture layer, 31: first positive electrode mixture layer, 31a, 61a: 1a positive electrode mixture layer, 31b, 61b: 1b positive electrode mixture layer, 32, 62: second positive electrode mixture layer, 53, 63: cutting part, 70: current collector sheet

**Claims**

1.  A secondary battery positive electrode comprising:

    a positive electrode current collector having a belt shape; and
    a positive electrode mixture layer carried on a surface of the positive electrode current collector, wherein
    the positive electrode current collector has a first region and a second region,
    the first region is an end area at both ends of the positive electrode current collector in a widthwise direction of the positive electrode current collector, extending in a longitudinal direction of the positive electrode current collector,
    the second region is a central area in a middle part of the positive electrode current collector in the widthwise direction, extending in the longitudinal direction of the positive electrode current collector,
    the positive electrode mixture layer includes a first positive electrode mixture layer carried on a surface of the first region, and a second positive electrode mixture layer carried on a surface of second region,
    the first positive electrode mixture layer contains a first positive electrode active material,
    the second positive electrode mixture layer contains a second positive electrode active material,
    an average particle diameter D1 of the first positive electrode active material is 1 $\mu$m or more and 7 $\mu$m or less, and
    an average particle diameter D2 of the second positive electrode active material is 9 $\mu$m or more and 30 $\mu$m or less.

2.  The secondary battery positive electrode according to claim 1, wherein
    an amount of the positive electrode mixture layer carried on the surface of the positive electrode current collector is 100 mg/10cm$^2$ or more and 400 mg/10cm$^2$ or less.

3.  The secondary battery positive electrode according to claim 1, wherein
    a density of the positive electrode mixture layer is 2.5 g/cm$^3$ or more and 4 g/cm$^3$ or less.

4.  The secondary battery positive electrode according to claim 1, wherein
    the positive electrode mixture layer contains a binder of 0.2% by mass or more and 5% by mass or less.

5.  The secondary battery positive electrode according to 1, wherein

    the first region includes a 1a region and a 1b region, each extending in the longitudinal direction of the positive electrode current collector, at one end edge and another end edge of the positive electrode current collector in the widthwise direction of the positive electrode current collector, respectively, and
    widths of the 1a region and the 1b region are each 1% or more and 20% or less of a width of the positive electrode current collector.

6.  A secondary battery comprising:

a positive electrode;
a negative electrode; and
a liquid electrolyte, wherein
the positive electrode is the secondary battery positive electrode according to claim 1.

7. A production method for secondary battery positive electrodes, comprising:

a first step of preparing a current collector sheet having first regions and second regions that alternate in a striped pattern;
a second step of preparing a first positive electrode slurry containing a first positive electrode active material;
a third step of preparing a second positive electrode slurry containing a second positive electrode active material;
a fourth step of forming a first positive electrode mixture layer by applying the first positive electrode slurry to surfaces of the first regions, followed by drying;
a fifth step of forming a second positive electrode mixture layer by applying the second positive electrode slurry to surfaces of the second regions, followed by drying; and
a sixth step of obtaining a plurality of positive electrodes in a belt shape by cutting within the first regions in a longitudinal direction of the first regions together with the first positive electrode mixture layer in a stacked intermediate of the first positive electrode mixture layer, the second positive electrode mixture layer, and the current collector sheet, wherein
an average particle diameter D1 of the first positive electrode active material is 1 $\mu$m or more and 7 $\mu$m or less, and
an average particle diameter D2 of the second positive electrode active material is 9 $\mu$m or more and 30 $\mu$m or less.

8. The production method for secondary battery positive electrodes, according to claim 7, wherein
the four step and the fifth step are performed simultaneously.

*FIG. 1*

*FIG. 2*

FIG. 3

FIG. 4

FIG. 5

## INTERNATIONAL SEARCH REPORT

| International application No. |
| --- |
| **PCT/JP2023/034913** |

| A. | CLASSIFICATION OF SUBJECT MATTER |
| --- | --- |

*H01M 4/13*(2010.01)i; *H01M 4/02*(2006.01)i; *H01M 4/04*(2006.01)i; *H01M 4/139*(2010.01)i; *H01M 4/62*(2006.01)i
FI:    H01M4/13; H01M4/02 Z; H01M4/04 A; H01M4/139; H01M4/62 Z

According to International Patent Classification (IPC) or to both national classification and IPC

| B. | FIELDS SEARCHED |
| --- | --- |

Minimum documentation searched (classification system followed by classification symbols)

H01M4/13; H01M4/02; H01M4/04; H01M4/139; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021/225316 A1 (LG ENERGY SOLUTION, LTD.) 11 November 2021 (2021-11-11) claims 1-2, 5-6, 8-9, paragraphs [0038], [0047]-[0048], [0062]-[0064], [0103]-[0113], fig. 4 | 1-6 |
| Y | | 7-8 |
| Y | JP 10-64527 A (SONY CORP) 06 March 1998 (1998-03-06) paragraphs [0010]-[0011], [0020], fig. 6 | 7-8 |
| Y | JP 2011-18637 A (PANASONIC CORP) 27 January 2011 (2011-01-27) paragraphs [0012]-[0013], [0046]-[0047], fig. 5-6 | 7-8 |
| A | JP 2019-149269 A (TOYOTA MOTOR CORP) 05 September 2019 (2019-09-05) entire text, all drawings | 1-8 |
| A | JP 2016-18731 A (TOYOTA MOTOR CORP) 01 February 2016 (2016-02-01) entire text, all drawings | 1-8 |
| A | US 2020/0313186 A1 (NINGDE AMPEREX TECHNOLOGY LIMITED) 01 October 2020 (2020-10-01) entire text, all drawings | 1-8 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 November 2023** | **12 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/034913**

| Patent document cited in search report | | | Publication date (day/month/year) | Patent family member(s) | | | Publication date (day/month/year) |
|---|---|---|---|---|---|---|---|
| WO | 2021/225316 | A1 | 11 November 2021 | JP 2022-542843 A claims 1-2, 5-6, 8-9, paragraphs [0031], [0040]-[0041], [0052]-[0053], [0087]-[0092], fig. 4 US 2022/0263062 A1 claims 1-2, 5-6, 8-9, paragraphs [0035], [0044]-[0045], [0057]-[0058], [0092]-[0099], fig. 4 EP 3996168 A1 KR 10-2021-0136842 A CN 114127987 A | | | |
| JP | 10-64527 | A | 06 March 1998 | (Family: none) | | | |
| JP | 2011-18637 | A | 27 January 2011 | (Family: none) | | | |
| JP | 2019-149269 | A | 05 September 2019 | (Family: none) | | | |
| JP | 2016-18731 | A | 01 February 2016 | US 2017/0162866 A1 entire text, all drawings WO 2016/006154 A1 KR 10-2017-0026610 A CN 106663781 A | | | |
| US | 2020/0313186 | A1 | 01 October 2020 | CN 109980177 A entire text, all drawings | | | |

Form PCT/ISA/210 (patent family annex) (January 2015)

**REFERENCES CITED IN THE DESCRIPTION**

**Patent documents cited in the description**

- JP 2018181543 A